Europäisches Patentamt

European Patent Office

Office européen des brevets

(19)

(11) Numéro de publication: **0 266 276**
**A1**

(12) **DEMANDE DE BREVET EUROPEEN**

(21) Numéro de dépôt: **87402445.8**

(22) Date de dépôt: **29.10.87**

(51) Int. Cl.⁴: **A 01 B 49/02**
**A 01 B 35/18**

(30) Priorité: **31.10.86 FR 8615217**

(43) Date de publication de la demande:
**04.05.88 Bulletin 88/18**

(84) Etats contractants désignés:
**AT BE DE ES FR GB IT NL SE**

(71) Demandeur: **Lechopier, Jean-Claude**
**Bornay-Champvert**
**F-58300 Decize (FR)**

(72) Inventeur: **Lechopier, Jean-Claude**
**Bornay-Champvert**
**F-58300 Decize (FR)**

(74) Mandataire: **Rinuy, Santarelli et al**
**14, avenue de la Grande Armée**
**F-75017 Paris (FR)**

(54) **Appareil agricole pour préparer un sol avant un semis.**

(57) Un appareil agricole pour préparer un sol qui comporte deux roues à crampons (3,4) disposées l'une derrière l'autre et liées en rotation par une transmission imposant un rapport de vitesse, entre la roue lente et la roue rapide, inférieur au rapport inverse de leurs diamètres.

On a ainsi un glissement d'au moins une des roues sur le sol, ce qui permet d'obtenir le travail recherché.

L'appareil s'utilise notamment pour la préparation du sol préliminaire à un semis.

Fig-1

EP 0 266 276 A1

Bundesdruckerei Berlin

**Description**

## APPAREIL AGRICOLE POUR PREPARER UN SOL AVANT UN SEMIS

L'invention concerne un appareil agricole pour préparer un sol avant un semis.

On saît qu'après le passage d'une charrue ou de tout autre outil de décompactage, le sol a une structure grossière, comportant de nombreuses mottes, et qu'il est nécessaire de l'affiner avant de faire un semis.

Les appareils connus pour réaliser ce travail présentent l'inconvénient de nécessiter au moins un passage de tracteur en plus du décompactage et de demander à celui-ci une puissance importante, ce qui se traduit par conséquent par une consommation d'énergie élevée, surtout pour les outils animés qui doivent en outre être nécessairement branchés sur la prise de force du tracteur, ce qui impose que l'appareil y soit attelé directement.

L'invention vise notamment à pallier ces inconvénients. Elle propose à cet effet un appareil comportant deux roues à crampons disposées l'une derrière l'autre et liées en rotation par une transmission imposant un rapport de vitesse, entre la roue lente et la roue rapide, inférieur au rapport inverse de leurs diamètres.

Dans une transmission avec modification des vitesses de rotation, on détermine aisément l'organe lent et l'organe rapide : si l'on prend l'exemple d'une transmission par chaîne entre deux organes tournants, on sait que le lent est celui qui porte le pignon ayant le plus grand nombre de dents.

Bien entendu, si l'on calcule le rapport de vitesse imposé par la transmission entre la roue rapide et la roue lente, il devra être supérieur au rapport inverse de leurs diamètres, qui, comme on le sait, est le rapport de vitesses pris normalement entre deux roues tournant ensemble sans glisser en se déplaçant sur un même sol.

Ainsi, dans un mode de réalisation de l'invention, l'appareil comporte une roue ayant un diamètre de 970 mm et portant un pignon de 38 dents coopérant avec une chaîne reliée à une autre roue portant un pignon de 21 dents et ayant un diamètre de 805 mm.

Si ces deux roues se déplaçaient ensemble en roulant sans glisser, le rapport entre les vitesses de rotation de la première et de la deuxième roue, égal au rapport inverse de leur diamètre, serait de 805 divisé par 970, soit 0,83.

Le rapport entre les vitesses desdits deux roues imposé par la transmission par chaîne, égal au rapport inverse du nombre de dents, est de 21 divisé par 38, soit 0,55.

En supposant que la roue rapide tourne sans glisser sur le sol, la transmission imposerait à la roue lente une vitesse inférieure à celle qu'elle prendrait sans glisser, elle tournerait donc avec un glissement dans le sens du freinage.

A l'inverse, en supposant que la roue lente tourne sans glisser, la transmission imposerait à la roue rapide de tourner plus vite que si elle roulait sans glisser, elle tournerait donc avec un glissement dans le sens de l'accélération.

En pratique les deux roues roulent et glissent à la fois, dans des proportions s'équilibrant en fonction de la capacité de chacune à glisser sur le sol.

Par exemple, si l'on fait pénétrer la roue rapide plus profondément dans le sol que la roue lente, elle glissera beaucoup moins que cette dernière, et sera en quelque sorte le "moteur" du freinage de la roue lente.

Celle-ci va donc rouler tout en glissant sur le sol à préparer qui va subir, en plus de l'effort dû au poids de l'appareil, un effort dû au glissement, dans le sens du freinage, ce qui favorise l'action d'émiettement du sol par les crampons qui s'avère alors suffisante, comme le demandeur a pu le constater, pour que le résultat obtenu, bien que superficiel, soit de qualité tout à fait satisfaisante pour effectuer un semis.

Contrairement aux dispositifs connus on ne travaille pas par chocs (comme avec une herse) ou par compression verticale (comme avec un rouleau) contre la terre à préparer, mais on réalise l'émiettement par compression horizontale de la terre sur elle-même, ce qui permet de ne travailler que l'épaisseur nécessaire à la réalisation du semis.

C'est ainsi que la puissance demandée est faible, ce qui offre l'avantage qu'on retire de la faible consommation d'énergie qui en découle.

La faible puissance demandée offre en outre un avantage encore plus intéressant. Elle permet en effet de pouvoir atteler directement un appareil selon l'invention derrière une charrue, et même d'atteler derrière l'appareil un semoir, un tracteur classique fournissant sans difficulté la puissance nécessaire pour remorquer l'ensemble formé par une charrue, un appareil selon l'invention et un semoir, alors qu'il fallait précédemment au moins un deuxième passage du tracteur, après le décompactage, pour terminer la préparation du sol et faire le semis.

On obtient donc une économie considérable en temps, en main-d'oeuvre et en énergie, et au surplus on évite l'inconvénient du tassage du sol, lors du deuxième passage du tracteur, à l'emplacement des roues, particulièrement néfaste au rendement des cultures.

En outre, l'invention offre l'avantage, en cas de labour, de permettre de travailler même sous la pluie, tant que le tracteur peut avancer sans patiner.

La roue utilisée pour le travail du sol est de préférence une roue squelette dont la structure et le poids conviennent particulièrement bien pour réaliser cette opération.

Conformément à une caractéristique préférée de l'invention, les crampons sont des barres en V dont la pointe, pour la portion de roue en contact avec le sol, est en avant pour la roue lente et en arrière pour la roue rapide.

On place ainsi, sur les deux roues, la pointe des crampons en avant dans le sens du glissement. Cette forme en V et ce sens de glissement des crampons est particulièrement intéressante du fait du travail obtenu sur la terre, comparable à celui effectué sur la neige par les skis d'un skieur lors d'un freinage en position "chasse-neige".

La hauteur des crampons permet de limiter ou d'augmenter l'épaisseur de la terre travaillée, ce qui influe directement sur la consommation d'énergie.

Le roue lente effectue ce travail dans le sens du déplacement tandis que c'est le contraire pour la roue rapide. On peut donc obtenir un travail de la terre équilibré où l'une des roues peut compenser, dans l'autre sens, les perturbations apportées par la première roue.

Selon une autre caractéristique préférée de l'invention, la transmission entre les deux roues est à rapport variable réglable afin de permettre, au cours du travail, l'adaptation dudit rapport à l'état du sol à travailler.

La capacité des roues à glisser sur le sol et la quantité de glissement nécessaires au travail peut en effet changer au cours de celui-ci, notamment si on rencontre un changement d'humidité ou de nature du sol. Il est donc avantageux de pouvoir régler le rapport, afin d'obtenir un travail optimum du sol.

Selon une autre caractéristique relative à un autre aspect de l'invention, l'appareil qui en fait l'objet comporte une lame transversale de nivellement du sol à travailler, formant avec celui-ci un angle aigu.

Ainsi placée la lame glisse sur le sol en l'égalisant, en même temps qu'elle parvient à briser certaines mottes et qu'elle compresse légèrement le sol, ce qui favorise sa cohésion.

Cette lame est de préférence sensiblement rectangulaire et plane, les coins avants étant légèrement relevés, ainsi que le bord arrière et elle est munie, sur les côtés, en arrière desdits coins avant, d'ailerons légèrement relevés.

Le relèvement des coins avants et du bord arrière permet d'obtenir un très bon travail du sol, de même que les ailerons de côté.

Le dispositif de montage de la lampe comporte de préférence des moyens amortisseurs et des moyens de réglage de l'inclinaison de la lame par rapport au sol à travailler.

Les moyens de réglage permettent d'adapter l'inclinaison de la lame à l'état du sol rencontré, tandis que les amortisseurs favorisent l'égalisation du sol et régulent la pression.

La lame est de préférence montée en avant d'une roue de travail du sol, le résultat obtenu étant meilleur lorsque la lame précède la roue. En outre, cela permet d'utiliser la lame comme appui sur le sol pour soulever une roue à crampons afin de faciliter son glissement sur le sol.

Selon une autre caractéristique de l'invention, relative à un autre de ses aspects, l'appareil comporte un dispositif relevable d'attelage trois points et des roues de transport escamotables, l'abaissement dudit dispositif d'attelage étant commandé simultanément avec l'escamotage des roues et vice-versa.

Les roues de transport évitent de travailler le sol lorsqu'on amène l'appareil dans le champ où il doit être utilisé. Lors de ce trajet il serait possible de faire rouler le semoir sur ses propres roues pneumatiques, il est cependant avantageux de le relever en même temps que l'on met l'appareil selon l'invention sur ses roues de transport, notamment en bout de champ quand le tracteur doit faire demi-tour, car cela rend cette manoeuvre bien plus aisée.

D'autres caractéristiques, particularités et avantages de l'invention apparaîtront avec celles et ceux mentionnés auparavant, dans la description d'un mode particulier de réalisation de l'invention, donnée ci-après uniquement à titre d'exemple, non limitatif, en référence aux dessins annexés. Sur ces dessins :

- la figure 1 est une vue de gauche d'un appareil selon l'invention;

- la figure 2 en est une vue de dessus, la lame niveleuse n'y ayant pas été représentée;

- la figure 3 est un schéma explicatif de la coopération de deux roues de travail d'un appareil selon l'invention; et

- la figure 4 est une vue de dessous de la lame niveleuse de l'appareil représenté sur la figure 1.

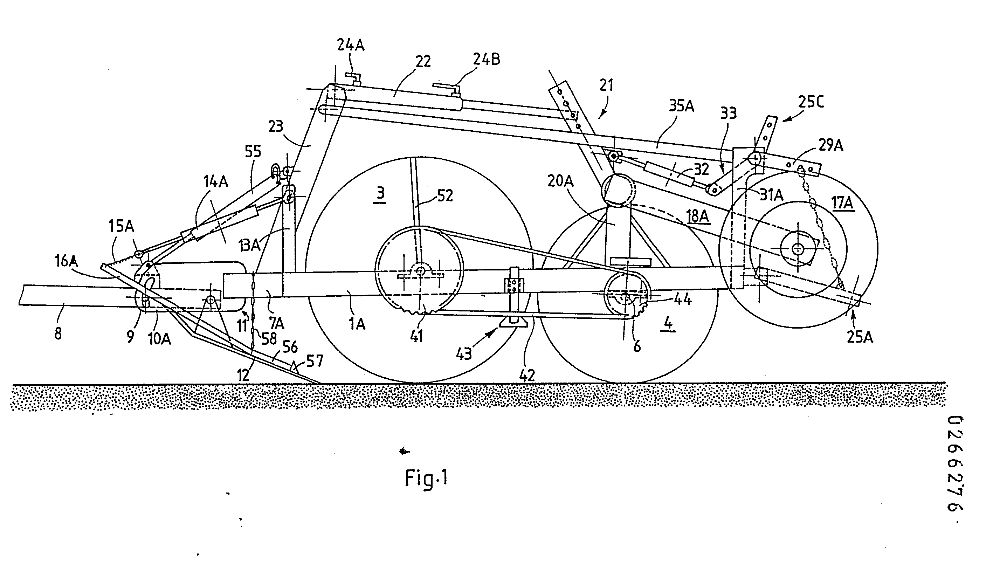

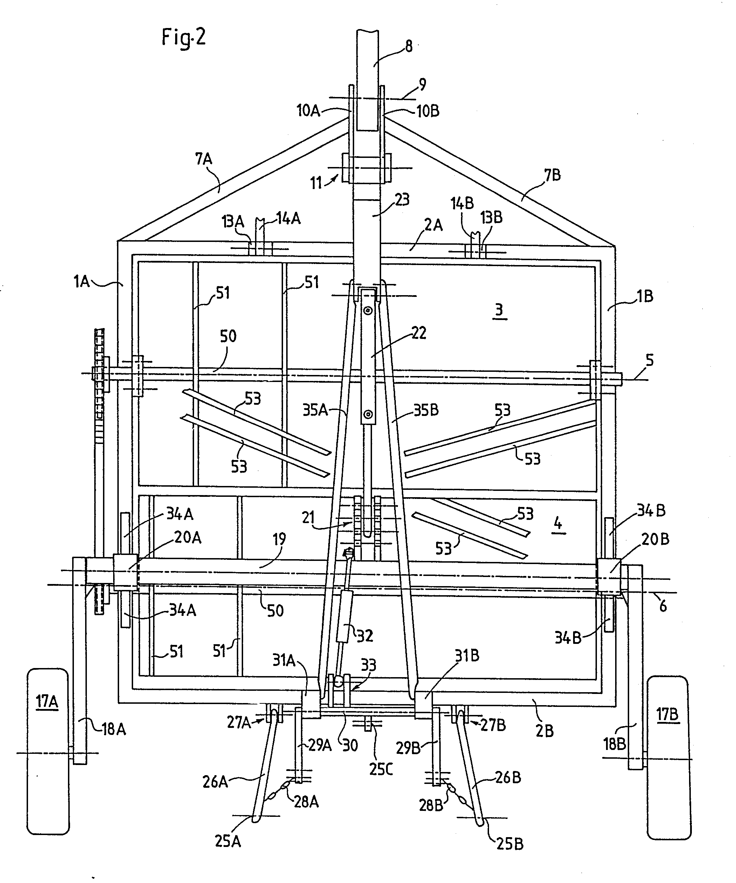

L'appareil selon l'invention montré sur les figures 1 et 2 comporte un bâti ayant une portion rectangulaire, comportant deux longerons 1A et 1B et deux traverses 2A et 2B, dans laquelle deux roues squelettes 3 et 4 sont montées à rotation autour d'axes horizontaux, respectivement 5 et 6, l'une derrière l'autre.

A l'avant de cette portion rectangulaire, le bâti se prolonge horizontalement par deux poutres 7A et 7B partant de chacune des extrémités de la traverse 2A et se rejoignant vers l'avant de l'appareil qui est muni de moyens d'attelage, ici une simple barre d'attelage 8 ayant une chape tournante à son extrémité d'accrochage (non représentée), et maintenue à l'appareil par un axe 9 se déplaçant dans une lumière pratiquée dans deux plaques 10A et 10B qui portent également des moyens 11 de montage d'une lame niveleuse 12, à rotation autour d'un axe horizontal.

Pour le montage de cette lame, la machine comporte, en outre de ces moyens 11, deux montants 13A et 13B fixés sur la traverse 2A, à l'extrémité desquels s'articulent des barres réglables en longueur 14A et 14B reliées par des moyens amortisseurs tels que le ressort 15A (figure 1) à des bras de manoeuvre 16A et 16B (voir figure 4) de la lame 12.

Deux roues pneumatiques escamotables 17A et 17B, représentées en position escamotée, sont prévues pour le transport de l'appareil qui est équilibré, lorsqu'il est sur roues, dans ce mode de réalisation, avec une légère tendance à ce que l'avant bascule vers le bas.

Ces roues sont montées respectivement sur des bras 18A et 18B fixés aux extrémités d'un arbre horizontal 19 monté à rotation sur des montants verticaux 20A et 20B fixés respectivement sur les longerons 1A et 1B. Une chappe 21 est fixée transversalement sur cet arbre 19 et une extrémité d'un vérin hydraulique 22 y est montée à rotation. L'autre extrémité de ce vérin est également montée à rotation au sommet d'un montant 23, légèrement incliné vers l'arrière, fixé à la fois sur la traverse 2A et sur les plaques 10A et 10B.

Des conduits hydrauliques 24A et 24B sont prévus pour relier le vérin 22 au circuit hydraulique du tracteur destiné à remorquer l'appareil.

A l'arrière de celui-ci est installé un dispositif relevable d'attelage, pour un semoir, à trois points : deux points bas 25A et 25B et un point haut 25C.

Les deux points bas 25A et 25B sont situés aux extrémités de bras relevables 26A et 26B articulés autour d'axes horizontaux sur des chappes 27A et 27B fixées sur la traverse 2B du bâti. Ces bras relevables sont reliés, ici par des chaînes 28A et 28B, à des bras de relèvement 29A et 29B fixés aux extrémités d'un arbre 30 monté à rotation autour d'un axe horizontal au sommet de montants verticaux 31A et 31B fixés sur la traverse 2B.

Une barre 32 réglable en longueur est montée à rotation à l'une de ses extrémités sur la chappe 21 et à l'autre sur une chappe 33 fixés transversalement à l'arbre 30.

Des pattes 34A et 34B renforcent le montage des montants 20A et 20B sur les longueurs 1A et 1B, tandis que, dans le même but, des barres 35A et 35B relient le sommet du montant 23 au sommet des montants 31A et 31B.

Ainsi qu'indiqué précédemment l'appareil est prévu pour être remorqué par un tracteur, soit attelé directement derrière celui-ci ou, plus avantageusement, indirectement derrière une charrue, notamment un brabant, cet attelage étant réalisé grâce au dispositif prévu à cet effet à l'avant de l'appareil, ici la barre articulée 8 que l'on y accroche, à l'autre extrémité (non représentée).

Un amortisseur 55, ici un vérin hydraulique ponté à débit limité, monté à rotation à ses extrémités sur le montant 23 pour l'une et sur la barre 8 pour l'autre, régule avantageusement la vitesse de débattement de l'appareil lorsqu'il y a déséquilibre, par exemple à cause de la quantité de grains contenus dans le semoir, et évite notamment l'amplification des secousses qui pourraient résulter du montage de la barre 8 dans une lumière, ce qui permet d'obtenir un travail stable de l'appareil. Bien entendu, tout autre dispositif d'attelage convient pour l'invention.

On notera la position des deux roues sur le bâti (l'une au dessus, l'autre en dessous), qui crée une pente pour les traverses 1A et 1B qui fait, lorsque l'appareil est tracté, que la roue avant 3 est "allégée" tandis qu'un effort supplémentaire en appui est exercé sur la roue arrière 4, ce qui est favorable à son adhérence sur le sol.

Conformément à l'invention, la lame transversale 12 de nivellement du sol à travailler (qui est en avant de ladite lame) forme avec celui-ci un angle aigu, que le demandeur a pu déterminer comme avantageusement compris entre 15 et 25° suivant le type de sol travaillé et l'humidité de celui-ci.

Le passage de la lame sur le sol labouré, très inégal et de structure grossière comportant de nombreuses mottes, a pour effet de commencer le nivelage et d'égaliser le sol tout en cassant ou en effritant certaines mottes, ainsi qu'en réalisant un léger tassement, la cohésion des mottes ainsi réalisée améliorant le travail de la roue lente.

Conformément à une caractéristique préférée de l'invention, le dispositif de montage de la lame comporte des ressorts, tels que le ressort 15A, comme moyens amortisseurs, et des moyens de réglage de l'inclinaison de la lame, obtenu ici en jouant sur la longueur des barres réglables 14A et 14B, l'augmentation de leur longueur faisant pivoter la lame autour des moyens 11 en réduisant l'angle qu'elle présente par rapport au sol à travailler et inversement.

On notera que la lame 12 est illustrée de façon simplifiée sur la figure 1, tandis qu'elle est représentée plus en détail sur la figure 4 qui en est une vue de dessous, la face que l'on peut y voir étant ainsi celle qui est en regard du sol.

Selon des caractéristiques préférées de l'invention, la lame 12 est sensiblement rectangulaire et plane, les coins avants 36A et 36B étant légèrement relevés ainsi que le bord arrière 37. La lame comporte en outre des ailerons 38A et 38B légèrement relevés, sur les côtés et en arrière des coins avants.

Plus précisément, dans le mode de réalisation représenté, la lame comporte une plaque centrale 39 sensiblement triangulaire sur laquelle sont fixées d'autres plaques réalisant les coins avants 36A et 36B, les ailerons 38A et 38B et le bord arrière 37. On observera que la lame comporte, pour son montage sur l'appareil, des bras de manoeuvre 16A et 16B à l'extrémité desquels sont accrochés des ressorts tels que le ressort 15A, ainsi qu'une chappe 40 destinée à coopérer avec les moyens 11.

On notera qu'à arrière de la plaque centrale 39 est disposée transversalement une poutre 56 assurant la rigidité de la lame, et qu'à l'arrière de cette poutre des équerres 57 consolident la lame dans la partie travaillante, tandis que la plaque formant le bord arrière 37 est faite dans un acier résistant à l'usure.

Une chaîne de retenue 58 assure le maintien de la lame lorsqu'est soulevé l'avant de l'appareil, notamment en cours de transport.

Le relèvement des coins avants permet une attaque progressive du sol à travailler, cette progressivité se poursuivant sur les côtés par les ailerons 38A et 38B et par le bord arrière relevé 37.

Le relèvement des coins avants, ailerons et bord arrière est relativement faible pour que la progressivité soit assurée. Ici, par rapport à la plaque centrale 39, ils sont relevés d'environ 15°.

Conformément à une autre caractéristique préférée de l'invention la lame est montée en avant de la roue de travail du sol 3.

Il est en effet préférable que la lame ait cette position qui convient en effet particulièrement bien pour préparer le travail de la roue qui, elle, complète parfaitement celui de la lame. Afin de soulever la roue avant 3 on règle de façon adéquate l'inclinaison de la lame. La pente du bâti et le régalge de la lame font que, quelles que soient les conditions, on obtienne un glissement de la roue avant 3. La finition de l'émiettement est réalisée par la roue arrière 4 qui réalise également un tassement tout à fait satisfaisant pour effectuer un semis.

Conformément à une caractéristique de l'invention, les roues 3 et 4 sont liées en rotation par une transmission, par chaîne dans ce mode de réalisation, imposant un rapport de vitesse entre la roue 3 et la roue 4 inférieur au rapport inverse de leurs diamètres.

Plus précisément, ici, la roue 3 a un diamètre de 970 mm et porte un pignon 41 de 38 dents relié par une chaîne 42, tendue par un tendeur de chaînes 43, a un pignon 44 de 21 dents porté par la roue 4, qui a un diamètre de 805 mm.

Comme indiqué précédemment à propos de cet exemple de réalisation, le rapport imposé par la transmission entre les vitesses des roues 3 et 4 est de 0,55 tandis que si elles roulaient sans glisser sur le sol ce rapport serait égal à 0,83.

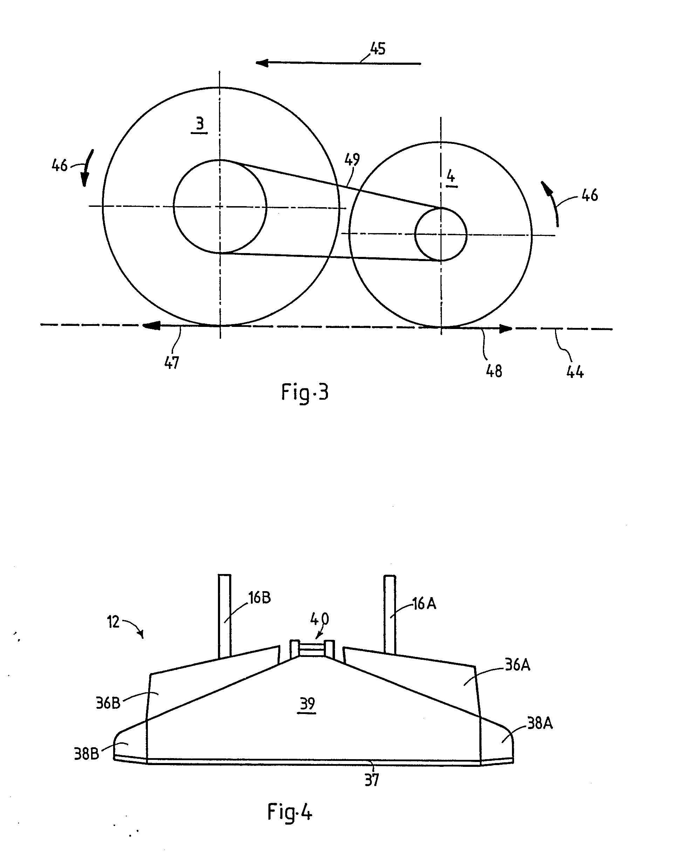

La figure 3 représenté schématiquement les roues 3 et 4 se déplaçant dans le sens de la flèche 45 sur un sol 44, ce qui fait que ces roues tournent dans le sens indiqué par les flèches 46. Du fait du rapport imposé par la transmission, si la roue 4 roulait sans glisser, la roue 3 roulerait en glissant sur le sol dans le sens indiqué par la flèche 47 tandis qu'à l'inverse ce serait la roue 4 qui glisserait dans le sens indiqué par la flèche 48.

Ce sont ces glissements qui sont recherchés pour travailler le sol, notamment s'il s'agit de terre sablo-argileuse ou limono-argileuse. Pour régler ces glissements, dans une machine selon l'invention, on dispose d'une part du réglage, par l'inclinaison de la lame, de l'enfoncement des roues dans le sol, et d'autre part du réglage du rapport de la transmission installée entre ces roues. Dans une variante représentée schématiquement sur la figure 3 la transmission entre les roues 3 et 4 est à rapport variable, grâce à une transmission par une courroie 49 coopérant avec des poulies portées par les roues faisant variateur à courroies.

Ce variateur, bien connu de l'homme de métier, est avantageusement (voir ci-dessus) réglable en cours de travail, c'est-à-dire depuis la cabine du tracteur remorquant l'appareil. Bien entendu des variantes de l'appareil, où d'autres types de transmission à rapport variable commandables à distance (par exemple des transmissions hydrauliques ou électriques) seraient utilisés, resteraient conformes à l'invention.

Le demandeur a pu déterminer que le rapport de la transmission est, de préférence, variable de 1/3 à 1 fois le rapport qu'il y aurait entre les vitesses de rotation des roues si elles roulaient sans glisser.

Selon une caractéristique préférée de l'invention les roues 3 et 4 sont des roues squelettes comportant chacune (voir figure 2) un moyeu 50 relié à des cercles 51 par des rayons 52 (voir roue 3, figure 1), tandis que des crampons 53 en V sont fixés sur ces cercles.

On notera que les roues sont représentées de façon simplifiée sur les figures 1 et 2, et notamment que c'est essentiellement leur contour qui est matérialisé, et que seuls quelques cercles 51 et portions de crampons 53 sont représentés, de même qu'est montré un seul rayon 52, alors que, par exemple, il y a trois rayons 52 par cercle 51.

Conformément à une autre caractéristique de l'invention, avantageuse ainsi qu'exposé précédemment, les crampons 53 sont des barres en V dont la pointe, pour la portion de roue en contact avec le sol, est en avant pour la roue lente et en arrière pour la roue rapide.

En d'autres termes, la pointe des crampons est placée de la même façon que la pointe des flèches 47 et 48 (figure 3).

Etant donné que, grâce à la lame, on peut alléger légèrement la roue squelette avant 3, c'est essentiellement celle-ci qui va glisser tandis que la roue 4, prenant appui sur le sol ne va pratiquement pas glisser. Cette roue 4 assure, en plus du travail du sol, une fonction de prise de mouvement, et réalise avec la transmission un dispositif de contrôle de la vitesse de rotation de la roue avant 3, lui imposant une vitesse de rotation inférieure à celle qu'elle prendrait en roulant sans glisser sur le sol.

On notera que ce contrôle du ralentissement de la roue 3 offre l'avantage d'être régulier et sans risque de blocage, ce qui aurait pour conséquence de créer des butées et irrégularités par amassement de terre.

Grâce à son glissement, la roue 3 poursuit le travail de la lame 12, en effritant et en émiettant la terre, travail qui est ensuite poursuivi, surtout en compression, par la roue 4.

Le travail obtenu est relativement superficiel, mais est tout à fait satisfaisant pour réaliser un semis, surtout dans le cas où on réalise en un seul passage du tracteur à la fois un labourage, la préparation complémentaire avec l'appareil et le semis, puisqu'il n'y a pas d'écrasement du sol labouré, par les roues du tracteur, à compenser.

Sur les figures 1 et 2, l'appareil est représenté avec les roues 17A et 17B en position escamotée tandis que l'attelage trois points 25A, 25B, 25C est en position abaissée, et le vérin 22 en position "tige rentrée".

Lorsqu'on fait sortir la tige du vérin 22, on fait tourner simultanément, mais en sens inverse, les arbres 19 et 30, du fait du montage en opposition des chappes 21 et 33.

On a donc simultanément l'abaissement des roues 17A et 17B et le relèvement de l'attelage (et donc du semoir attelé) ou, à l'inverse, le relèvement des roues et l'abaissement du semoir.

Bien entendu, la présente invention ne se limite pas aux exemples de réalisation décrits et représentés sur les figures, elle englobe aussi toutes les variantes que l'homme de métier pourra déterminer, et notamment celle où la roue lente serait "motrice" et la roue rapide une roue de travail, par exemple en mettant dessus-dessus la partie de l'appareil sur laquelle sont montées les roues 3 et 4.

**Revendications**

1. Appareil agricole pour préparer un sol avant un semis caractérisé en ce qu'il comporte deux roues à crampons (3,4) disposées l'une derrière l'autre et liées en rotation par une transmission (44,42,41) imposant un rapport de vitesse, entre la roue lente et la roue rapide, inférieur au rapport inverse de leurs diamètres.

2. Appareil selon la revendication 1 caractérisé en ce que lesdites roues (3,4) sont des roues squelettes.

3. Appareil selon l'une quelconque des revendications 1 ou 2 caractérisé en ce que lesdits crampons sont des barres en V (53) dont la pointe, pour la portion de roue en contact avec le sol, est en avant pour la roue lente (3) et en arrière pour la roue rapide (4).

4. Appareil selon l'une quelconque des revendications 1 à 3 caractérisé en ce que ladite transmission est à rapport variable réglable afin de permettre, au cours du travail, l'adaptation dudit rapport à l'état du sol à travailler.

5. Appareil selon l'une quelconque des revendications 1 à 4 caractérisé en ce qu'il comporte une lame transversale (12) de nivellement du sol à travailler, formant avec celui-ci un angle aigu.

6. Appareil selon la revendication 5 caractérisé en ce que ladite lame (12) est sensiblement rectangulaire et plane, les coins avants (36A,36B) étant légèrement relevés, ainsi que le bord arrière (37), et en ce qu'elle est munie, sur les côtés, en arrière desdits coins avants, d'ailerons (38A,38B) légèrement relevés.

7. Appareil selon l'une quelconque des revendications 5 ou 6 caractéristé en ce que le dispositif de montage de la lame (12) comporte des moyens de réglage (14A,14B) de l'inclinaison de la lame par rapport au sol à travailler.

8. Appareil selon l'une quelconque des revendications 5 à 7 caractérisé en ce que le dispositif de montage de la lame comporte des moyens amortisseurs (15A).

9. Appareil selon l'une quelconque des revendications 5 à 8 caractérisé en ce que la lame (12) y est montée en avant d'une roue à crampons (3).

10. Appareil selon l'une quelconque des revendications 1 à 9 caractérisé en ce qu'il comporte un dispositif relevable d'attelage trois points et des roues de transport escamotables (17A,17B), l'abaissement dudit dispositif d'attelage étant commandé simultanément avec l'escamotage des roues et vice-versa.

0266276

Fig.1

Fig·2

0266276

0266276

Fig·3

Fig·4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 123 265  (VAN DER LELY NV) * En entier * | 1,2 | A 01 B  49/02 |
| A | | 3 | A 01 B  35/18 |
| A | DE-A-2 818 274  (MASCHINENFABRIK RAU GmbH) * Page 12, paragraphe 2 - page 15, premier paragraphe; figures 1-5 * | 1,5,7,9 | |
| A | GB-A-2 019 703  (HOWARD MACHINERY) * En entier * | 10 | |
| A | GB-A-2 007 071  (LIVIO BIASOTTO) * En entier * | 1,2 | |
| A | GB-A-2 137 463  (MACHINEFABRIEK STEKETEE B.V.) * En entier * | 1,2 | |

DOMAINES TECHNIQUES
RECHERCHES (Int. Cl.4)

A 01 B

Le présent rapport a été établi pour toutes les revendications

| Lieu de la recherche | Date d'achèvement de la recherche | Examinateur |
|---|---|---|
| LA HAYE | 17-12-1987 | VERDOODT S.J.M. |

EPO FORM 1503 03.82 (P0402)